# EUROPEAN PATENT APPLICATION

(11) **EP 1 011 279 A2**
(43) Date of publication of application: **21.06.2000**
(21) Application number: 99309820.1
(22) Date of filing: 07.12.1999
(51) Int. Cl.: H04Q 7/22

(54) **Precursive messaging protocol for initiating position location**

(30) Priority: 15.12.1998 US 211005
(71) Applicant: LUCENT TECHNOLOGIES INC., Murray Hill, New Jersey 07974-0636 (US)
(72) Inventor: Mizikovsky, Semyon B., Morganville (US); Palamara, Maria E., Denville (US); Pearson, Oriett Wanda, Piscataway (US); Tekinay, Sirin, Morristown (US); Wang, Jian-Ren, Downers Grove (US)
(74) Representative: Buckley, Christopher Simon Thirsk

(57) **Abstract**

The messaging protocol modifies current CDMA systems to initiate a position location function while providing minimal interference to the system and preserving battery life. There are circumstances when a mobile position location may need to be performed when the mobile 40 is in a mobile idle state, a system access state or a traffic channel state. These location requests can come from a serving base station or from the mobile. In addition, for certain location services, the position of the mobile may have to be located periodically. The messaging protocol describes how the position location function is to be initiated when the mobile is in various call processing states and identifies the messaging needed between the serving base station and the mobile. The serving base station transmits a location order message that includes location parameter data to the mobile. The mobile then transmits a location attempt message to the base station. The location attempt message is formatted according to the location parameter data and includes at least one location probe having the mobile identification number or a probe number. The CDMA system then determines the position of the mobile based on the location attempt.

## Description

### Field of the Invention

The present invention relates to a method for communicating in a wireless CDMA system, and more particularly, to a method for communicating in a wireless CDMA system between mobiles and base stations.

### Description of Related Art

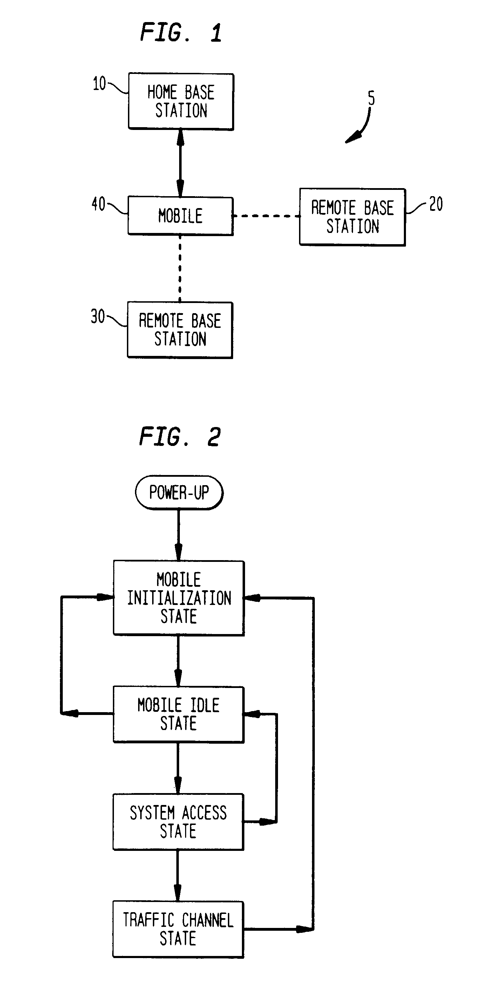

For the transmission from a mobile operating in a distressed environment to be triangulated, the transmission signal has to be received by three or more base stations simultaneously. The base stations will receive the transmission signal from the mobile only if the signal is strong enough to reach the base stations at a predetermined threshold signal strength. Very often that requires an increase of mobile transmitted power, which causes extensive interference in the receive band of base stations and drains the mobile's power. Fig. 1 illustrates a conventional CDMA wireless system 5 including a serving base station 10, remote base stations 20 and 30 and a mobile 40. The mobile 40 communicates with the base stations 10, 20 and 30 via communication channels over which signals modulated with data and a variety of codes, including pseudo-random noise (PN) codes and Walsh codes, are transmitted.

The conventional CDMA wireless system is governed by the IS-95 standard and employs a plurality of communication channels on a single radio frequency (RF) carrier signal. A typical wireless CDMA system allows for communication over paging channels, access channels and traffic channels. A serving base station sends initialization information including access parameters, neighboring base station information and channel list information needed for the mobile 40 to access the serving base station 10. The mobile 40 sends messages over the access channel to the serving base station 10 when the mobile 40 is not on a traffic channel. Voice communication between the mobile 40 and other communication devices, such as a telephone, facsimile, modem, etc., via the serving base station 10 takes place over the traffic channel. Accordingly, via the access channel, the mobile 40 requests that the serving base station 10 assigns a traffic channel for the mobile 40 to use when making a call.

Fig. 2 illustrates the call processing states of the mobile 40 according to the IS-95 standard. When a mobile 40 is powered up, it enters a mobile initialization state S10 and performs an initialization process. In the mobile initialization process, the mobile 40 hashes onto a paging channel and obtains the initialization information to access the base station 10 and acquire system timing. The initialization process must be repeated if: (1) the mobile 40 looses the reference signal or pilot channel signal of the serving base station, (2) the mobile 40 is unable to receive a paging channel message, or (3) the mobile 40 switches base stations. The initialization process must be completed before calls can be made or received by the mobile 40. In addition, before a call can be made, the mobile 40 has to confirm that its paging channel information is current.

After the initialization state S10 is completed, the mobile 40 may enter an idle state S20 wherein the mobile 40 is not engaged in communication with the serving base station 10. During the idle state S20, the mobile 40 may monitor particular paging channel slots such as its mobile specific slot, and sleep the rest of the time to save battery life. The mobile 40 may also operate in an unslotted mode to monitor all paging channel slots, for example, when the mobile 40 attempts to access the CDMA system 5.

If the mobile 40 receives a paging channel message requiring an acknowledgment or response, then the mobile 40 enters the system access state S30. The mobile 40 also enters the system access state S30 when the mobile 40 originates a call or performs registration. The mobile 40 periodically performs registration so that the serving base station 10 knows that the mobile is still powered up and so that the system has a general idea of where the mobile 40 is located. This allows the system to determine if a mobile hand off operation is desired. While the mobile 40 is in the system access state S30, any message sent from the mobile 40 to the serving base station 10 must include the ID of the mobile 40. The mobile 40 returns to the idle state S20 from the system access state S30 if the mobile 40 receives an acknowledgement to an access channel transmission other than an origination message or a page response message.

While in the system access state S30, the mobile 40 can request that the serving base station 10 assign a traffic channel for the mobile 40 to use in making a call. The serving base station 10 then assigns the mobile 40 a traffic channel as an outside line and the mobile 40 enters the traffic channel state S40 and makes the call using the dedicated traffic channel.

There may be times when a mobile's position must be determined regardless of the state that the mobile 40 is in. A standard protocol does not currently exist for initiating a mobile position location procedure when the mobile is in any powered on state without requiring an increase in the mobile's transmission power that would cause extensive interference in the receive band of the base stations and exhaust battery power. If higher power level mobile transmission messages are sent, the coinciding frames of other mobiles may easily be lost, and IS-95 cannot recover the frame from the error burst if the coinciding location probes cause a frame error.

### Summary Of The Invention

The present invention improves upon conventional systems to initiate the position location function regardless of a mobile's current call processing state. This is accomplished by transmitting a location order message using one of a plurality of communication channels based on the current call processing state of the mobile to be located. The location order message specifies the location parameters that the mobile shall use for responding to the location order message. The mobile responds to the location order message by transmitting a location attempt on another one of the plurality of communication channels based on the current call processing state of the mobile. The location attempt includes a series of location probes transmitted at increasing power levels up to a predetermined maximum power level. Each location probe contains a location response message that carries information about the mobile's ID. It is understood that the present invention is not limited by the messaging throughout the rest of the CDMA system, which is specific to the location system architecture deployed therein.

### Brief Description Of The Drawings

The present invention will become more fully understood from the detailed description given hereinbelow and the accompanying drawings which are given by way of illustration only, wherein like reference numbers designate corresponding parts in the various drawings, and wherein:
Fig. 1 is a block diagram illustrating the basic components of a conventional CDMA wireless system;
Fig. 2 illustrates the conventional mobile station call processing states according to the IS-95 standard;
Fig. 3 illustrates the communication between the serving base station and the mobile to initiate position location according to the present invention when the mobile is in the mobile idle state S20;
Fig. 4a illustrates a location order message according to the present invention;
Fig. 4b illustrates a location attempt according to the present invention;
Fig. 5 illustrates a graph of system time versus initial output power for a plurality of location probes transmitted as part of a location attempt according to the present invention;
Fig. 6 illustrates the communication between the serving base station and the mobile to initiate position location according to the present invention when the mobile is in the system access state S30; and
Fig. 7 illustrates the communication between the serving base station and the mobile to initiate position location according to the present invention when the mobile is in the traffic channel state S40.

### Detailed Description Of The Preferred Embodiments

The present invention will be described with reference to Figs. 1 and 2 as described above. The present invention is directed to a precursive messaging protocol for initiating position location. The protocol used depends upon the state of the mobile 40. The detailed description will initially describe the precursive messaging protocol for initiating position location when the mobile 40 is in the mobile idle state.

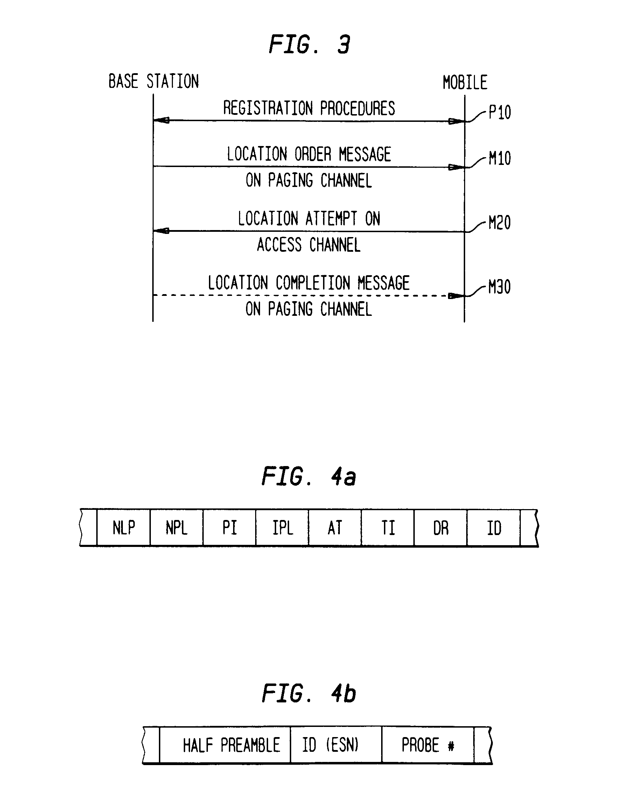

Fig. 3 illustrates the communication between the serving base station 10 and the mobile 40 to initiate position location in the mobile idle state. As shown in Fig. 3, after the mobile 40 performs the registration procedures P10, the serving base station 10 sends a location order message M10 on the paging channel. This message M10 requires acknowledgment from the mobile 40 and specifies the location parameters that the mobile 40 shall use for its location attempt. The mobile 40 responds to the location order message M10 by sending a location attempt M20, which is a series of location probes, each containing a location response message, on the access channel back to the serving base station 10.

Fig. 4a illustrates the location parameters in the location order message M10 sent by the serving base station 10. The parameters include: (1) the number of location probes (NLP), (2) the nominal power level (NPL), (3) the power increment (PI), (4) the initial power level (IPL), (5) the action time (AT), (6) the time interval between location probe (TI), (7) the data rate at which the location probe shall be sent (DR), and (8) the mobile station ID (ID).

The number of location probes (NLP) represents the maximum number of probes to be transmitted by the mobile 40 during a location attempt M20. The nominal power level (NPL) represents the minimum threshold level of the location attempt M20 as received by the serving base station 10. Each succeeding location probe is transmitted at an incrementally higher power level over the previous location probe. The power increment (PI) represents the additional output power level of each succeeding probe sent during the location attempt M20. The initial power level (IPL) represents the additional output power level of the first probe of a location attempt as described below.

The action time (AT) indicates, explicitly or implicitly, when the mobile 40 is to transmit the first location probe. The implicit action time is the expected time interval needed by the mobile 40 to respond to the location order message M10. The explicit action time is explicitly set by the serving base station 10 to identify the time interval for the serving base station 10 to search for a response, such as the location attempt M20. If the mobile 40 does not respond within the implicit or explicit action time interval, then the serving base station 10 may resend the location order message M10 or declare the mobile 40 unattached from the CDMA system 5.

The time interval (TI) between location probes represents the time between the end of transmission of one probe and the beginning of transmission of the next probe. The data rate (DR) is the data rate at which the location probe shall be sent by the mobile 40. The mobile identification (ID) identifies the specific mobile 40 from other mobiles. In a preferred embodiment, to keep the message size to an absolute minimum, the electronic serial number (ESN) of the mobile 40 is used as the ID of the mobile 40.

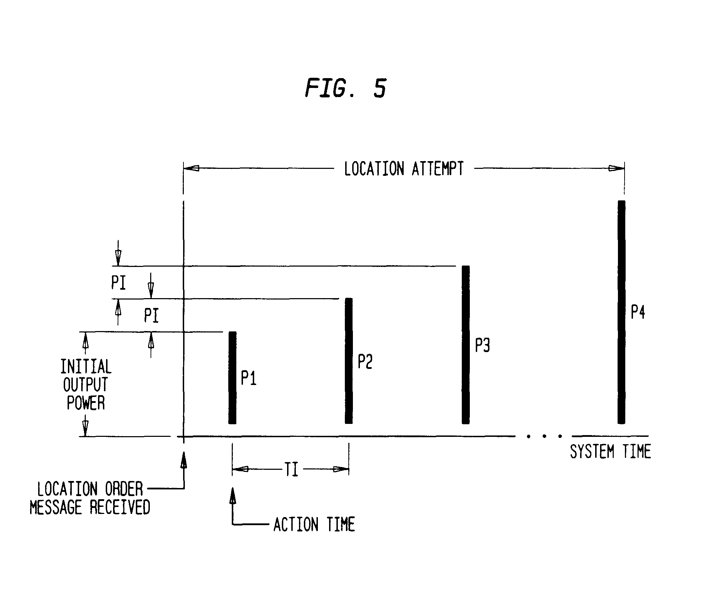

Fig. 5 illustrates an example graph of system time versus initial output power for the location attempt M20 having plurality of location probes transmitted at increasing power levels from the mobile 40 to the base stations 10, 20 and 30. A location probe transmitted by the mobile 40 is, in a preferred embodiment, contained within a 20 msec message capsule. Fig. 4b illustrates the format of a location probe. As shown, half of the location probe is occupied by a binary zero pattern to mimic half of a preamble as a signal to alert the base stations 10, 20 and 30 to listen to the location probe and is used for frame synchronization at the serving base station 10. The other half of the probe is occupied by the location response message. As shown in Fig. 4b, the location response message carries information about the mobile's ID and the probe number.

The mobile 40 transmits each location probe at a mean output power plus an adjusted power level. The mean output power is specified and described in the IS-95 standard and is the output power that the mobile 40 normally uses when communicating with the serving base station 10. However, for the CDMA system 5 to use known triangulation methods to determine the position of the mobile 40, at least three base stations must receive the location attempt M20 from the mobile 40. In Fig. 1, remote base stations 20 and 30 are located farther away from the mobile 40 than the serving base station 10 is located from the mobile 40. Therefore, in order for messages from the mobile 40 to be received by the remote base stations 20 and 30, the mobile 40 sends each location probe at a location probe output power level greater than the mean output power level. The location probe output power level is equal to the mean output power level plus an adjusted power level. The adjusted power level is the additional power level used for communicating with the remote base stations 20 and 30.

The mobile 40 transmits a first location probe at an output power level equal to the mean output power level plus the initial power level (IPL). The output power level of any succeeding location probe is calculated as the output power level of the previous location probe plus the power increment (PI). Thus the output power level of a second location probe equals the output power level of the first location probe plus the power increment (PI). The output power level of a third location probe equals the power level of the second location probe plus another power increment (PI). The output power level increases for each succeeding location probe accordingly unless the calculated output power level of a location probe exceeds the maximum power supported by the mobile 40. Then the mobile 40 transmits the location probe and any succeeding location probes at the maximum output power level of the mobile 40.

If the mobile 40 needs to send any other channel access messages within a location attempt, such as a location or channel measurement as specified by the IS-95 standard, then the mobile 40 must set its output power to the mean output power level or the nominal power level (NPL). The other channel messages are transmitted at the lower mean output power level or nominal power level (NPL) because the other channel messages only need to be received by the serving base station 10, and not the more distant remote base stations 20 and 30. Therefore, the additional power needed to transmit to the remote base stations 20 and 30 is not required.

As shown in Fig. 5, upon receipt of the location order message M10, the mobile 40 generates the first location probe P1 at an output power level equal to the lesser of the calculated initial output power level determined from equation (1) and the maximum output power level of the mobile 40 and transmits the probe at the action time (AT) and the data rate (DR) specified in the location order message M10. If the number of location probes (NLP) is greater than one, then the mobile 40 adds a power increment (PI) to the initial output power. After the time interval between location probes (TI) expires, the mobile 40 generates and transmits a second location probe P2 at the data rate (DR) and having a second output power level equal to the lesser of the incremented initial output power and the maximum output power level of the mobile 40. If the number of location probes (NLP) is greater than two, then the mobile 40 adds the power increment (PI) to the output power level of the second location probe P2. The mobile 40 then generates the third location probe P3 at a third output power equal to the lesser of the newly determined output power level and the maximum output power of the mobile 40, and transmits the third location probe P3 at the data rate (DR) and a time interval (TI) after the time of transmission of the second probe P2.

Accordingly, successive location probes are generated and transmitted at the time interval (TI) after the preceding probe, and each succeeding probe is transmitted at a power level that is either one power increment (PI) greater than the power of the previous probe or equal to the maximum output power of the mobile 40. The location attempt continues in this manner until the mobile 40. has sent all prescribed location probes, which is the number of location probes (NPL), or when the mobile 40 receives a location completion message from the base station, as described below. The location probes are transmitted to the serving base station 10 and to the remote base stations 20 and 30.

Upon receipt of the location attempt M20, the serving base station 10 and remote base stations 20 and 30 operate on the probes and the position of the mobile 40 is determined. The position of the mobile 40 may be determined using any triangulation method, such as the well-known time difference of arrival (TDOA) or angle of arrival methods.

After the position of the mobile 40 is determined, the serving base station 10 generates and sends the location completion message M30 on the paging channel to the mobile 40. The location completion message M30 informs the mobile 40 that the location attempt M20 was satisfactorily received so that the mobile 40 can stop sending location probes and thus stop using unnecessary energy. The location completion message M30 does not have to be generated if the mobile 40 has sent all prescribed location probes before the location attempt M20 is satisfactorily received by the base stations 10, 20 and 30, or if the location attempt M20 was not satisfactorily received. However, the location completion message M30 will be transmitted if it includes the determined position of the mobile 40.

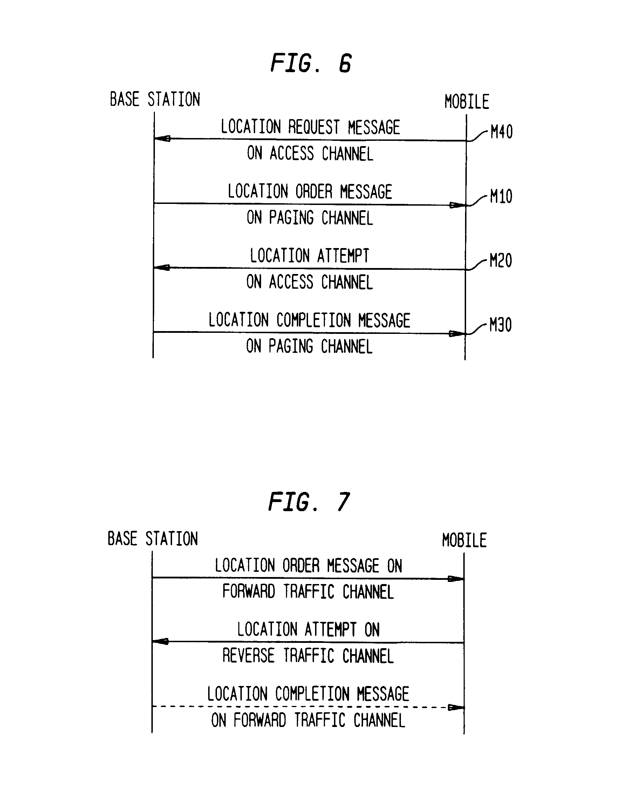

The precursive messaging protocol for initiating position location will next be described for when the mobile 40 is in the system access state S30. Fig. 6 illustrates the communication between the serving base station 10 and the mobile 40 to initiate position location when the mobile 40 is in the system access state S30. The mobile 40 is in the system access state S30 when it is requesting communication or requesting to be located by the serving base station 10. In the system access state S30, the mobile 40 initiates the position location precursive messaging by generating and sending a location request message M40 to the serving base station 10.

The location request message M40 is formatted to the IS-95 standard and is a request for the mobile 40 to be located. The location request message M40 may be transmitted automatically when a user of the mobile 40 enters "911", or when a user enters a programmed feature code from the mobile 40 requesting location of the mobile 40. The serving base station 10 receives and operates on the location request message M40 by generating and sending a location order message M10 on the paging channel to the mobile 40. The mobile 40 replies by sending a location attempt M20 on the access channel to the serving base station 10 as shown in Fig. 6. The serving base station 10 responds by determining the position of the mobile 40 and sending the location completion message M30 on the paging channel to the mobile 40.

The location order message M10, location attempt M20 and location completion message M30 transmitted when the mobile 40 is in the system access state S30 are the same as transmitted when the mobile 40 is in the mobile idle state S20, as described above with respect to Figs. 3-5. However, the location completion message M30 will automatically be generated when the mobile 40 is in the system access state S30 because the location of the mobile 40 was requested by the location message M40. Therefore, the mobile 40 will receive an acknowledgement that the location attempt M20 was or was not satisfactorily received and its location has been determined.

The invention will next be described when the mobile 40 is in the traffic channel state S40. Fig. 7 illustrates the communication between the mobile 40 and the serving base station 10 to initiate position location of the mobile 40 when the mobile 40 is in the traffic channel state S40. After the serving base station 10 assigns a traffic channel to the mobile 40 for making a call, the mobile 40 enters the traffic channel state S40 and uses the dedicated traffic channel to make the call. During the call, the mobile 40 sends and receives user data, such as voice packets, of the ongoing conversation.

As shown in Fig. 7, the serving base station 10 initiates the location attempt by sending a location order message M50 on the forward traffic channel to the mobile 40, and the mobile 40 replies by sending location attempt M60 on the reverse traffic channel to the serving base station 10 as shown in Fig. 7. Other than the channels used, the location order message M50 transmitted on the forward traffic channel and the location attempt M60 transmitted on the reverse traffic channel are the same as the location order message M10 and location attempt M20 transmitted on the paging channel and access channel, respectively, described above for when the mobile 40 is in the mobile idle state S20 or the system access state S30.

When the mobile 40 is operating on the traffic channel, its identity is uniquely identified to the base station 10 by the long code mask. That is, the voice packets are known to be from the specific mobile 40 because the traffic channel is private and dedicated to the specific mobile 40. Therefore, when operating on the traffic channel, the mobile ID is not required in the location probes thereby allowing the length of the location probes to be reduced. Accordingly, the length of the location probes transmitted on the traffic channel are reduced to minimize the impact on system capacity from additional interference caused by the location probes.

In typical CDMA systems, each frame consists of 16 power control groups (PCGs). If the CDMA system transmits data at the full data rate, then all 16 PCGs of each frame are occupied with data. If the CDMA system transmits data at the one-half data rate, then 8 of the 16 PCGs of each frame are occupied with data. If the CDMA system transmits data at the one-fourth data rate, then 4 of the 16 PCGs of each frame are occupied with data. When the data rate is less than the full rate, then generally a randomizer selects which of the 16 PCGS in each frame are occupied.

For example, in the case of a 1/8 rate transmission, the location probe will include only two power control groups (PCGs) of 2 x 1.25 msec for a 20 msec frame. The advantage of delivering a location probe at 1/8 data rate on the traffic channel is that the transmission occurs during two PCGs, which are pseudo-randomly placed in a 20 msec frame with a randomizer, and does not significantly increase the power usage of the mobile 40. In other words, the chances of a location probe from mobile 40 hitting another mobile's frame and causing frame error for the other mobile are reduced, while not significantly draining the power of the mobile 40. The mobile 40 could also bypass the randomizer for the positions of the PCGs within each frame and transmit them consecutively in the location probe. Transmitting the PCGs together provides the additional benefit of using the extra power only once during a frame which would drain the mobile 40 less than several separate power bursts. Transmitting the PCGs together nearly ensures that both PCGs will not hit both occupied PCGs of another mobile's frame, because a randomizer selects half of the occupied PCGs from the first 8 PCGs of the frame, and selects the other half of the occupied PCGs from the last 8 PCGs of the frame.

During the period of the location attempt M60 on the reverse traffic channel, the closed loop power control in the mobile 40 shall be turned off. The closed loop power control is used by the CDMA system during normal communications. Under closed loop power control, the output power level of the mobile 40 can be raised or lowered only 1 db per second. Therefore, it would take several seconds for the power level required for transmitting location probes to be reached. Accordingly, the closed loop power control is turned off during the location attempt M60 so that the location probes can be sent without an undue delay.

In response to the location attempt M60 sent from the mobile 40 to the base station 10 via the reverse traffic channel, the position of the mobile 40 is determined. After the position of the mobile 40 is determined, the serving base station 10 sends a location completion message M70 to the mobile 40 on the forward traffic channel which is the same as the above-described location completion message M30 sent on the paging channel when the mobile 40 is in the mobile idle state S20 or system access state S30. The location completion message M70 informs the mobile 40 that the location response message M60 was or was not satisfactorily received and may include the determined position of the mobile 40.

Between transmission of location probes, the output power of the mobile 40 returns to the mean output power level or the nominal power level (NPL) as indicated in the location order message M50. After the location probes have been transmitted via the reverse traffic channel, the output power of the mobile 40 returns to its last value before transmission of this location probes and waits for the location completion message M70.

The invention being thus described, it will be obvious that the same may be varied in many ways. For example, the messaging protocols would also apply if the mobile were not operating in a distressed environment. Such variations are not to be regarded as a departure from the spirit and scope of the invention, and all such modifications are intended to be included within the scope of the following claims.

## Claims

1. A method for initiating position location, comprising the steps of:
(a) creating a location order message having location parameter data; and
(b) emitting the location order message.

2. The method of claim 1, wherein the location parameter data includes at least one of a number of location probes, a power increment, and a time interval between the location probes.

3. The method of claim 2, wherein the location parameter data further includes at least one of a nominal power level, an initial power level, an action time, a data rate at which the location probes shall be sent, and a device identification.

4. The method of claim 1, wherein
the step (b) emits the location order message on one of a paging channel and a traffic channel.

5. The method of claim 1, further comprising:
(c) receiving a location attempt message formatted according to the location parameter data, said location attempt message including at least one location probe having information regarding at least one of an identification of an object and a probe number, and the location attempt message is operated on to determine a position of the object.

6. The method of claim 5, wherein the location attempt message includes a plurality of location probes, each location probe having a power level greater than a previous location probe or equal to the maximum power level of the object.

7. The method of claim 6, wherein the location parameter data includes a power increment equal to a difference between the power level of each location probe and the power level of the previous location probe.

8. The method of claim 5, wherein
the step (c) receives the location attempt message on one of an access channel and a traffic channel.

9. The method of claim 5, further comprising:
(d) emitting a location completion message to acknowledge that the location attempt message received in the step (c) was satisfactorily received.

10. The method of claim 9, wherein the step (d) emits the location completion message including the determined position of the object.

11. The method of claim 9, wherein the step (b) emits the location order message and the step (d) emits the location completion message on a same channel.

12. A method for initiating position location, comprising the steps of:
(a) creating a location attempt message in response to a location order message; and
(b) emitting the location attempt message.

13. The method of claim 12, wherein
the location order message includes location parameter data, and
the step (a) creates the location attempt message in a format based on the location parameter data.

14. The method of claim 13, wherein the location parameter data includes at least one of a number of location probes, a power increment, and a time interval between the location probes.

15. The method of claim 14, wherein the location parameter data further includes at least one of a nominal power level, an initial power level, an action time, a data rate at which the location probes shall be sent, and a device identification.

16. The method of claim 12, wherein
the step (b) emits the location attempt message on one of an access channel and a traffic channel.

17. The method of claim 12, wherein
the step (a) creates the location attempt message including at least one location probe having information regarding at least one of an identification of an object and a probe number, and the location attempt message is operated on to determine a position of the object.

18. The method of claim 17, wherein
the step (b) emits a plurality of location probes, and each location probe having a power level greater than a previous location probe or equal to the maximum power level of the object.

19. The method of claim 18, wherein the location parameter data includes a power increment equal to a difference between the power level of each location probe and the power level of the previous location probe.

20. The method of claim 12, further comprising:
(c) receiving a location completion message indicating that the location attempt message emitted in the step (b) was satisfactorily received.

21. The method of claim 20, wherein the step (c) receives the location completion message including the determined position of the object.

22. The method of claim 12, prior to step (a), further comprising:
(e) receiving the location order message on the paging channel when a mobile is in one of a mobile idle state and a system access state and on the traffic channel when a mobile is in the traffic channel state.
